# FASCICULE DE BREVET EUROPEEN

(11) **EP 2 374 844 B1**
(45) Date de publication et mention de la délivrance du brevet: **05.12.2018**
(21) Numéro de dépôt: 11305400.1
(22) Date de dépôt: 06.04.2011
(51) Int. Cl.: C08K 3/22, C08L 83/04, C09D 183/04, C09D 183/06, C09D 5/24, B64G 1/22, B64G 1/54

(54) **Revêtement blanc antistatique à base silylée**
Silylated anti-static white covering
Weiße Antistatikbeschichtung auf silylierter Basis

(30) Priorité: 08.04.2010 FR 1052674
(43) Date de publication de la demande: 12.10.2011
(73) Titulaire: CENTRE NATIONAL D'ETUDES SPATIALES, 75001 Paris (FR)
(72) Inventeur: Remaury, Stéphanie, 31460 AURIAC SUR VENDINELLE (FR); Nabarra, Pascale, 31450 BAZIEGE (FR); Guillaumon, Olivier, 31560 SAINT-LEON (FR); Reymond, Serge, 09340 VERNIOLLE (FR)
(74) Mandataire: Gaillarde, Frédéric F. Ch.

(56) Documents cités:
- FR-A1- 2 842 531
- JP-A- 2010 006 994
- US-A- 4 317 855
- US-A- 5 770 269
- US-A- 5 916 668
- US-A- 6 124 378

## Description

La présente invention concerne les revêtements conducteurs électriques pour la protection antistatique des substrats diélectriques ou métalliques, notamment d'engins spatiaux, et en particulier les lanceurs et satellites. Ces revêtements doivent répondre à plusieurs exigences : tout d'abord, il est primordial d'éviter l'accumulation de charge en surface. On recherche donc des peintures antistatiques pour éviter ces phénomènes dits de « flash over » (décharges électrostatiques en surface).

Par ailleurs, ces revêtements doivent participer au contrôle thermique de l'engin. Il est donc important que la peinture soit blanche, pour permettre une réflexion totale des rayonnements solaires et éviter un échauffement de l'engin qui pourrait en résulter.

Ainsi, ces peintures doivent répondre à des spécifications très strictes en termes d'absorption solaire (alpha), d'émissivité infrarouge (epsilon), de résistance électrique superficielle et d'adhérence.

Dans la demande FR 2 568 577 est décrit un pigment d'oxyde d'étain dopé à l'oxyde d'antimoine ainsi que les peintures le contenant, permettant notamment l'élimination des charges électrostatiques. Néanmoins, ledit pigment, coloré, doit être mélangé avec un pigment blanc pour répondre aux exigences de faible absorption solaire. Par ailleurs, ce pigment est onéreux et ne répond plus aux normes environnementales européennes. Une peinture à base d'oxyde d'étain et d'oxyde d'antimoine est également décrite dans FR 2 668 491. Néanmoins, là encore, l'ajout de dioxyde de titane est nécessaire pour rendre la peinture blanche.

US 3,538,022 décrit une méthode de fabrication d'oxyde de zinc dopé par de l'oxyde d'aluminium, gallium ou indium.

US 5,312,614 décrit également la production d'un pigment blanc à base d'oxyde de zinc, dopé par de l'oxyde de gallium, ledit pigment étant blanc et électriquement conducteur. Néanmoins, aucun de ces documents ne décrit une peinture contenant un tel pigment, notamment une peinture pour les applications spatiales répondant aux exigences techniques précitées.

US 5,916,668 et US 5,770,269 décrivent une composition comprenant une matrice polymérique silicone comprenant des particules d'oxyde de zinc dopées.

JP 2010 006994, US 4,317,855 et FR 2 842 531 ne décrivent pas l'utilisation de dopant de l'oxyde de zinc.

US 6,124,378 décrit une composition comprenant un matériau particulaire, un liant organique et un véhicule de peinture, ledit matériau particulaire pouvant être un matériau à base de mélange d'oxydes.

L'invention a donc pour objet de fournir un revêtement blanc antistatique, convenant à l'application sur engins spatiaux notamment.

Selon un premier objet, l'invention concerne donc une composition comprenant une composante « base » et une composante « durcisseur », telle que la «base» comprend au moins un pigment à base d'oxyde de zinc dopé par de l'oxyde de gallium Ga₂O₃ à 1-5% (en poids), un liant de type polymère à base de silicium, un solvant de ce liant et la composante «durcisseur» comprend au moins un agent durcisseur.

Ledit liant peut être choisi notamment parmi :
- les polysiloxanes R'₃SiO(R₂SiO)ₙSiR'₃ où R et R' peuvent être un groupement de type méthyle, vinyle, phényle, époxy, hydroxy, alkoxy, hydrure ou halogéné et n un chiffre ou nombre compris entre 1 et 10000. On peut ainsi citer par exemple et notamment les polydiméthylsiloxanes ([SiO(CH₃)₂]ₙ), et plus particulièrement les polydiméthylsiloxanes à terminaison silanol. Ainsi, les polydiméthylsiloxanes à terminaison silanol présentant une viscosité comprise entre 16 et 100 000 cSt, notamment entre 5000 et 50 000 cSt, conviennent particulièrement au revêtement selon l'invention. On peut donc ainsi notamment citer les polydiméthylsiloxanes à terminaison silanol DMS-S35®, DMS-S42® et DMS-S45® commercialisés par GELEST. Bien entendu, d'autres polydiméthylsiloxanes à terminaison silanol connus de l'homme du métier peuvent convenir également. Les polysiloxanes peuvent représenter 0 à 90% en poids de la «base» ; et/ou
- les résines polymères de silicone, telles que les résines polymères de type MQ, MDQ, MD, MT notamment porteuses de groupements méthyle, vinyle, phényle, époxy, hydroxy, alkoxy, hydrure ou halogéné. Les résines peuvent représenter de 0 à 90% en poids de la «base» ; et/ou
- leurs mélanges.

Préférentiellement, ledit liant comprend au moins un polydiméthylsiloxane à terminaison silanol.

Comme solvant, on peut utiliser, à titre indicatif, des hydrocarbures aromatiques (toluène, xylène, styrène, naphta, etc.), des hydrocarbures aliphatiques (white spirit, essences, pétrole, etc.), des cétones (méthyléthylcétone, méthylisobutylcétone, diacétone alcool, etc.), des esters (acétate d'éthyle, acétate de méthyle, acétate de propyle, acétate d'étylèneglycol, acétate de méthylèneglycol, etc.), des éthers de glycol (éthylglycol, butylglycol, méthylèneglycol, propylèneglycol, etc.), des alcools (éthanol, propanol, méthanol, etc.), alcanes aliphatiques tel que n-heptane et aromatiques, esters, cétones, siloxanes à faibles poids moléculaires notamment, des hydrocarbures terpéniques (essence de térébenthine, etc.), et de l'eau. On peut citer plus particulièrement l'eau, les alcanes aliphatiques et aromatiques, esters, cétones, siloxanes à faible poids moléculaire, et notamment l'hexaméthyldisiloxane, l'octaméthyltrisiloxane et l'octaméthylcyclotétrasiloxane.

La proportion de solvant peut aller jusqu'à 60 % en poids de la «base».

Le pigment est de l'oxyde de zinc (ZnO) dopé par Ga₂O₃, à 1-5%, préférentiellement 1-2% (poids) de Ga₂O₃. Le pigment selon l'invention peut être préparé par application ou adaptation de toute méthode connue en soi, telle que notamment par traitement en température et sous atmosphère réductrice, notamment les méthodes décrites dans US 3,538,022 ou US 5,312,614. Le pigment ZnO/ Ga₂O₃ est généralement utilisé sous forme dispersée ou broyée.

Le pigment peut également comprendre tout autre pigment blanc tel que TiO₂, ZnO, dans des proportions entre 0 et 75% en poids.

Ledit agent durcisseur peut être choisi parmi :
- les polysiloxanes R'₃SiO(R₂SiO)ₙSiR'₃ où R et R' peuvent être un groupement de type méthyle, vinyle, phényle, époxy, hydroxy, alkoxy, hydrure ou halogéné et n un chiffre ou nombre compris entre 1 et 10000. Les polysiloxanes sont compris entre 0 et 90% en poids de la composante « durcisseur » ;
- les monomères, oligomères ou polymères siloxanes, mono, di, tri ou quadri substitué par des groupements hydroxy, alkoxy, hydrure, époxy ou vinyle ; et/ou
- leurs mélanges.

Préférentiellement, l'agent durcisseur est choisi parmi au moins un monomère, oligomère ou polymère siloxane, mono, di, tri ou quadri substitué par des groupements hydroxy, alkoxy, hydrure, époxy ou vinyle, et notamment les alkoxysiloxanes tels que triéthoxysilane, méthyltriéthoxysilane, méthyltriméthoxysilane, éthyltriéthoxysilane, isopropyltriméthoxysilane, isopropyltriéthoxysilane, n-butyltriméthoxysilane, isobutyl-triméthoxysilane, phényltriméthoxysilane, n-phénylaminopropyltriméthoxysilane, 3-(méth)acryloxypropyltriéthoxysilane, 3-aminopropyltriéthoxysilane, 3-mercaptopropyl-triméthoxysilane, polydiéthoxysilane, and fluoropropyltriéthoxysilane, ou un copolymère méthylhydrodiméthylsiloxane terminaison triméthylsiloxy...

La composante «durcisseur» comprend en outre un agent retardant et/ou un solvant.

La composante «durcisseur» peut également comprendre en outre un agent retardant de type vinylsiloxane (tel que le 1,3-divinyltetramethylsiloxane), polyvinylsiloxane (tel que le 1,3,5,7-tetravinyl-1,3,5,7-tetramethylcyclosiloxane).

La composante «durcisseur» peut également comprendre un solvant choisi parmi l'eau, les alcanes aliphatiques et aromatiques, esters, cétones, siloxanes à faible poids moléculaire, et leurs mélanges.

La composante «base» et/ou la composante «durcisseur» peut éventuellement comprendre en outre un catalyseur. Ledit catalyseur peut être choisi parmi tout catalyseur utilisé pour favoriser les réactions à froid ou à chaud, tels que les dérivés du platine, du titane, ou de l'étain, notamment le dibutyldiacétate d'étain. Le catalyseur peut être compris à raison de 0 à 10 % en poids de la «base». Généralement, le catalyseur est ajouté en quantité telle que le rapport (poids) catalyseur : liant est inférieur à 0,5 %, préférentiellement compris entre 0,1 et 0,2%.

Généralement, le rapport en poids des composantes «base» : «durcisseur» est compris entre 1 et 100.

Le rapport durcisseur : liant est généralement compris entre 10 et 70 % (poids). Généralement, la quantité de durcisseur peut être adaptée en fonction du taux de fonctions réactives dans la «base» et le durcisseur.

Généralement, les compositions selon l'invention sont telles que le rapport pigment : liant est compris entre 1 et 7 (poids). De préférence, ledit rapport pigment : liant en poids est compris entre 1 et 4, encore plus préférentiellement entre 1 et 2.

Sans toutefois être liés par la théorie, les inventeurs ont identifié que le rapport pigment : liant permettait notamment d'ajuster les propriétés d'adhérence et de résistance électrique de la composition. Ainsi, lorsque ce rapport augmente, l'adhérence de la composition diminue. Inversement, lorsque ce rapport diminue, la résistance électrique augmente.

Bien entendu, les compositions de l'invention peuvent comprendre dans la «base» et/ou la composante « durcisseur », tous adjuvants désirés communément employés dans les formulations de revêtements, à condition, bien sûr, qu'ils ne dégradent pas excessivement les spécifications techniques précitées. On peut ainsi citer par exemple les agents de rhéologie et adjuvants permettant d'améliorer les performances d'adhérence, couverture, séchage ou conservation notamment. La proportion de ces agents peut varier entre 0,5 et 25% (poids) de la composition totale.

Selon un autre objet, l'invention concerne également le procédé de préparation d'une composition selon l'invention.

Le procédé comprend la préparation de la «base», d'une part par mélange de ses constituants et la préparation du «durcisseur», d'autre part par mélange de ses constituants.

Selon un autre objet, la présente invention concerne également le procédé de préparation d'un revêtement comprenant le mélange des composantes « base » et « durcisseur » d'une composition selon l'invention.

Ce mélange consiste à mélanger la composante «base» et la composante «durcisseur». Ceci est habituellement réalisé sous agitation manuelle ou mécanique.

Le type d'équipement et l'outillage, ainsi que la vitesse de cisaillement peuvent être adaptés par l'homme du métier selon des pratiques usuelles afin d'obtenir une dispersion homogène propice à l'obtention d'un film conducteur.

La présente invention concerne aussi le revêtement susceptible d'être ainsi obtenu.

Le revêtement selon l'invention satisfait notamment aux spécifications suivantes requises pour les engins spatiaux, à savoir :
- facteur d'absorptivité solaire α inférieur ou égal à 0,3 ;
- émissivité infra-rouge ε supérieure ou égale à 0,8 ;
- résistance électrique superficielle comprise entre 1 et 1000 MΩ/□ selon la norme ASTMD 257-97 ou-98, -99 ou ASTM D257-07, telle que mesurée à la pression atmosphérique ou sous vide primaire (10⁻³ Torr) ;
- et adhérence de classe 0 ou 1 sur 5, de préférence 0, selon la norme NFEN ISO2409 (classement 30-038).
- Les peintures pour satellites doivent, par ailleurs, présenter un faible dégazage sous vide (Norme ESA ECSS-Q-70-02A) et une radio-transparence dans une bande de fréquences allant de quelques kHz à 20 GHz, telle que l'atténuation du signal due au revêtement n'excède pas -0,1 dB ;

Les revêtements selon l'invention peuvent présenter une viscosité comprise entre 10 et 30 s coupe AFNOR n°6 ou 10 à 30 s coupe AFNOR N°4. Ils ont généralement un comportement rhéologique de type newtonien ou thixotrope.

Selon un autre objet, la présente invention concerne également les substrats revêtus d'un revêtement selon l'invention. Lesdits substrats sont généralement tout support métallique ou diélectrique nécessitant un tel revêtement, notamment dans les domaines aéronautique, aérospatial, militaire photovoltaïque, électrique et chimique.

Le revêtement de l'invention peut être appliqué sur toutes sortes de substrats tels que des polyimides, des composites de polyimides ou d'époxydes renforcés de fibres de verre, de fibres d'aramide (Kevlar®), de fibres de carbone, verre, Kapton®, silicones et composites silicones, etc., ou des métaux.

On peut ainsi citer les satellites, lanceurs ou tout élément de tels satellites ou lanceurs ainsi revêtus.

Les revêtements de l'invention peuvent s'appliquer en une ou plusieurs couches sur le substrat à peindre, et leur épaisseur peut varier de quelques micromètres à quelques millimètres selon les applications envisagées. Généralement, l'épaisseur par couche est avantageusement comprise entre 5 et 250 µm, avec une résistance électrique superficielle comprise entre 1 et 1000 MΩ/□.

L'application de la couche de revêtement de l'invention sur un substrat est réalisée sous forme de film de peinture et peut s'effectuer par pulvérisation mécanique manuelle ou automatique au pistolet à peinture, à la brosse, au pinceau, au pochoir ou par toute autre technique connue.

Si désiré ou nécessaire, on peut appliquer une couche de primaire d'accrochage, ou toute autre couche primaire, par exemple primaire d'adhérence ou anti-corrosion, avant d'appliquer le revêtement de l'invention. Plus particulièrement dans le cas des substrats métalliques, les primaires d'adhérence et d'anticorrosion MAPSIL® P255 red/clear, Alu-D, E' et MAPSIL® SILICo, commercialisés par la société MAP pourront être appliqués.Dans le cas de supports diélectriques, des primaires d'adhérence (MAPSIL® P255 clear, Alu-D, Kapt A et E' notamment commercialisés par la société MAP) pourront être avantageusement appliqués.

Les exemples suivants sont donnés à titre illustratif et non limitatif de la présente invention.

### Exemple 1 :

On mélange dans 100 g de polydiméthylsiloxane à terminaison silanol (DMS-S42 Gelest) 210 g de pigment ZnO dopé à 2% de Ga₂O₃, dans un mélange de 363 g d'hexaméthyldisiloxane (DC200 Dow Corning) et de 121g de octaméthylcyclotétrasiloxane (trétramère D4 Bluestar Silicones). Ce mélange A est broyé avec 794 g de billes pendant 3 mn dans un broyeur à billes Red Devil. On sépare la composition obtenue des billes par tamisage. On prépare par ailleurs le mélange B composé de 17 g de polydiéthoxysiloxane (AB106292 ABCR), 23 g de méthyltriméthoxysilane (AB111244 ABCR) puis de 0.16 g de dibutyldiacétate d'étain (8.20386 MERCK). On mélange A et B avant application.

### Exemple 2 :

On mélange dans 100 g de polydiméthylsiloxane à terminaison silanol (DMS-S35 Gelest) 286 g de pigment ZnO dopé à 2 % de Ga₂O₃, dans un mélange de 450 g de d'hexaméthyldisiloxane (DC200 Dow Corning) et de 150g de octaméthylcyclotétrasiloxane (trétramère D4 Bluestar Silicones). Ce mélange A est broyé avec 986 g de billes pendant 3 mn dans un broyeur à billes Red Devil. On sépare la composition obtenue des billes par tamisage. On prépare par ailleurs le mélange B composé de 43 g de polydiéthoxysiloxane (AB106292 ABCR) et de 0.3 g de dibutyldiacétate d'étain (8.20386 MERCK). On mélange A et B avant application.

### Exemple 3 :

On mélange dans 100 g polydiméthylsiloxane à terminaison silanol (DMSS35), 300 g de pigment ZnO dopé à 1.5 % de Ga₂O₃ dans 215 g de solvants [octaméthyltrisiloxane + n-heptane]. Par ailleurs, on mélange 10 g de polydiéthoxysiloxane (AB106292 ABCR) et des traces (<0,15 g) du catalyseur dibutyldiacétate d'étain (8.20386 MERCK), dans 10 g de solvants [octaméthyltrisiloxane + n-heptane]. On mélange les deux constituants ainsi formés au moment juste avant application.

### Exemple 4 :

On applique la composition des exemples 1 à 3 dans les conditions suivantes :
- substrat : AU4G pour test d'adhérence, verre pour mesure de la résistance électrique, sur Kapton (exemples 1 et 2) et sur composite silicone (exemple 3) pour mesures alpha et epsilon)
- primaire E' selon la fiche technique du fabriquant (exemples 1 et 2)
- conditions de séchage : de 2 à 5 jours à 20°C / 50% HR

### Exemple 5 :

- Les compostions selon les exemples 1à 3 ci-dessus ont été testées pour leur épaisseur, adhérence, absorptivité, émissivité et résistance électrique superficielle. Les résultats sont résumés dans le tableau ci-dessous :

| | Exemple 1 | Exemple 2 | Exemple 3 |
|---|---|---|---|
| Epaisseur peinture | 74 µm | 96 µm | 75 µm |
| Adhérence | 0/5 | 0/5 | 0/5 |
| αp | 0.28 | 0.26 | 0.29 |
| εn | 0.91 | 0.91 | 0.91 |
| Rs | 20 à 30 MΩ/□ | 50 à 60 MΩ/□ | 15 à 45 MΩ/□ |

## Revendications

1. Composition comprenant une composante « base » et une composante « durcisseur », telle que la composante «base» comprend au moins un pigment à base d'oxyde de zinc dopé par de l'oxyde de gallium Ga₂O₃ à 1-5% (en poids), un liant de type polymère de silicium et un solvant de ce liant et la composante « durcisseur » comprend au moins un agent durcisseur.

2. Composition selon la revendication 1 telle que ledit liant est choisi parmi les résines polymères de silicone.

3. Composition selon la revendication 1 ou 2 telle que ledit liant est choisi parmi les polysiloxanes R'₃SiO(R₂SiO)ₙSiR'₃ où R et R' représentent un groupement de type méthyle, vinyle, phényle, époxy, hydroxy, alkoxy, hydrure ou halogéné et n un chiffre ou nombre compris entre 1 et 10000.

4. Composition selon l'une des revendications 1 à 3 telle que le liant comprend un polydiméthylsiloxane à terminaison silanol.

5. Composition selon l'une quelconque des revendications précédentes telle que la composante «base» et/ou «durcisseur» comprend en outre un catalyseur.

6. Composition selon l'une quelconque des revendications précédentes telle que l'agent durcisseur est choisi parmi les monomères, oligomères ou polymères siloxanes, mono, di, tri ou quadri substitué par des groupements hydroxy, alkoxy, hydrure, époxy ou vinyle.

7. Composition selon l'une quelconque des revendications précédentes telle que l'agent durcisseur est choisi parmi les polysiloxanes R'₃SiO(R₂SiO)ₙSiR'₃ où R et R' peuvent être un groupement de type méthyle, vinyle, phényle, époxy, hydroxy, alkoxy, hydrure ou halogéné et n un chiffre ou nombre compris entre 1 et 10000 ;

8. Composition selon l'une quelconque des revendications précédentes telle que la composante «durcisseur» comprend en outre un agent retardant et/ou un solvant.

9. Composition selon l'une quelconque des revendications précédentes telle que le rapport pigment : liant est compris entre 1 et 7 (poids).

10. Procédé de préparation d'une composition selon l'une quelconque des revendications 1 à 9 comprenant la préparation de la composante «base» d'une part par mélange de ses constituants et la préparation de la composante «durcisseur» d'autre part par mélange de ses constituants.

11. Procédé de préparation d'un revêtement comprenant le mélange des composantes « base » et « durcisseur » d'une composition selon l'une quelconque des revendications 1 à 9.

12. Revêtement susceptible d'être obtenu par le procédé selon la revendication 11.

13. Revêtement selon la revendication 12 tel qu'il présente les caractéristiques suivantes :
- facteur d'absorptivité solaire α inférieur ou égal à 0,3 ;
- émissivité infra-rouge (ε) supérieure ou égale à 0,8 ;
- résistance électrique superficielle comprise entre 1 et 1000 MΩ/□ selon la norme ASTMD 257-97, -98, -99 ou ASTMD257-07, telle que mesurée à la pression atmosphérique ou sous vide primaire (10⁻³ Torr) ;
- adhérence de classe 0 ou 1 sur 5 selon la norme NFEN ISO2409 (classement 30-038).

14. Substrat revêtu d'un revêtement selon la revendication 12 ou 13.

15. Substrat selon la revendication 14 choisi parmi les satellites, lanceurs ou tout élément de tels satellites ou lanceurs.

## Patentansprüche

1. Zusammensetzung, die eine "Basis"-Komponente und eine "Härter"-Komponente umfasst, wobei die "Basis"-Komponente mindestens ein Pigment auf Basis von mit Galliumoxid Ga₂O₃ dotiertem Zinkoxid zu 1-5 (Gewichts-)%, ein Bindemittel vom Siliziumpolymertyp und ein Lösungsmittel dieses Bindemittels umfasst, und die "Härter"-Komponente mindestens ein Härtungsmittel umfasst.

2. Zusammensetzung nach Anspruch 1, wobei das Bindemittel aus den Silikonpolymerharzen ausgewählt ist.

3. Zusammensetzung nach Anspruch 1 oder 2, wobei das Bindemittel aus den Polysiloxanen R'₃SiO(R₂SiO)ₙSiR'₃ ausgewählt ist, wobei R und R' für eine Gruppe vom Typ Methyl, Vinyl, Phenyl, Epoxy, Hydroxy, Alkoxy, Hydrid oder halogeniert stehen, und n für eine Ziffer oder Zahl im Bereich zwischen 1 und 10000.

4. Zusammensetzung nach einem der Ansprüche 1 bis 3, wobei das Bindemittel ein Polydimethylsiloxan mit endständigen Silanolgruppen umfasst.

5. Zusammensetzung nach einem der vorstehenden Ansprüche, wobei die "Basis"- und/oder "Härter"-Komponente weiter einen Katalysator umfasst.

6. Zusammensetzung nach einem der vorstehenden Ansprüche, wobei das Härtungsmittel ausgewählt ist aus den Siloxanmonomeren, -oligomeren oder -polymeren, die mit Hydroxy-, Alkoxy-, Hydrid-, Epoxy- oder Vinylgruppen mono-, di-, tri- oder quadrisubstituiert sind.

7. Zusammensetzung nach einem der vorstehenden Ansprüche, wobei das Härtungsmittel aus den Polysiloxanen R'₃SiO(R₂SiO)ₙSiR'₃ ausgewählt ist, wobei R und R' eine Gruppe vom Typ Methyl, Vinyl, Phenyl, Epoxy, Hydroxy, Alkoxy, Hydrid oder halogeniert sein können, und n eine Ziffer oder Zahl im Bereich zwischen 1 und 10000.

8. Zusammensetzung nach einem der vorstehenden Ansprüche, wobei die "Härter"-Komponente weiter ein Flammschutzmittel und/oder ein Lösungsmittel umfasst.

9. Zusammensetzung nach einem der vorstehenden Ansprüche, wobei das Verhältnis Pigment: Bindemittel im Bereich zwischen 1 und 7 (Gewicht) beträgt.

10. Verfahren zur Herstellung einer Zusammensetzung nach einem der Ansprüche 1 bis 9, das auf der einen Seite die Herstellung der "Basis"-Komponente durch Mischen ihrer Bestandteile, und auf der anderen Seite die Herstellung der "Härter"-Komponente durch Mischen ihrer Bestandteile umfasst.

11. Verfahren zur Herstellung einer Beschichtung, das die Mischung der "Basis"- und "Härter"-Komponente einer Zusammensetzung nach einem der Ansprüche 1 bis 9 umfasst.

12. Beschichtung, die über das Verfahren nach Anspruch 11 erhalten werden kann.

13. Beschichtung nach Anspruch 12, wobei sie die folgenden Merkmale aufweist:
- Sonnenabsorptionsvermögensfaktor α kleiner oder gleich 0,3;
- Infrarot-Emissionsvermögen (ε) größer oder gleich 0,8;
- elektrischer Oberflächenwiderstand im Bereich zwischen 1 und 1000 MΩ/□ nach der Norm ASTMD 257-97, -98, -99 oder ASTMD257-07, wie auf dem Atmosphärendruck oder unter Primärvakuum (10⁻³ Torr) gemessen;
- Haftvermögen der Klasse 0 oder 1 von 5 nach der Norm NFEN ISO2409 (Klassifizierung 30-038).

14. Substrat, das mit einer Beschichtung nach Anspruch 12 oder 13 beschichtet ist.

15. Substrat nach Anspruch 14, ausgewählt aus den Satelliten, Trägerraketen oder jedem Element wie etwa Satelliten oder Trägerraketen.

## Claims

1. A composition comprising a « base » component and a « hardener » component, such that the « base » component comprises at least one pigment based on zinc oxide doped with gallium oxide Ga₂O₃ at 1-5% (in weight), a silicon polymer type binder and a solvent of this binder and the « hardener » component comprises at least one hardener agent.

2. The composition according to claim 1, such that said binder is selected from silicone polymer resins.

3. The composition according to claim 1 or 2, such that said binder is selected from polysiloxanes R'₃SiO(R₂SiO)ₙSiR'₃ where R and R' represent a methyl, vinyl, phenyl, epoxy, hydroxy, alkoxy, hydride or halogenated group and **ana** digit or number comprised between 1 and 10000.

4. The composition according to any of claims 1 to 3, such that the binder comprises a polydimethylsiloxane terminated with a silanol group.

5. The composition according to any one of the preceding claims, such that the « base » and/or « hardener » component further comprises a catalyst.

6. The composition according to any one of the preceding claims, such that the hardener agent is selected from monomers, oligomers or siloxane polymers, whether mono, di, tri or quadri, substituted with hydroxy, alkoxy, hydride, epoxy or vinyl groups.

7. The composition according to any one of the preceding claims, such that the hardener agent is selected from polysiloxanes R'₃SiO(R₂SiO)ₙSiR'₃ where R and R' may be a methyl, vinyl, phenyl, epoxy, hydroxy, alkoxy, hydride or halogenated group and **ana** digit or number comprised between 1 and 10000.

8. The composition according to any one of the preceding claims, such that the « hardener » component further comprises a retardant agent and/or a solvent.

9. The composition according to any one of the preceding claims, such that the pigment/binder ratio is comprised between 1 and 7 (in weight).

10. A method for preparing a composition according to any one of claims 1 to 9 comprising on the one hand the preparation of a « base » component by mixture of its constituents and on the other hand the preparation of the « hardener » component by mixture of its constituents.

11. A method for preparing a coating comprising the mixture of the « base » and « hardener » components of a composition according to any one of claims 1 to 9.

12. A coating likely to be obtained by the method according to claim 11.

13. The coating according to claim 12, such that it presents the following characteristics:
- solar absorptivity factor α lower than or equal to 0.3;
- infrared emissivity (ε) higher than or equal to 0.8;
- superficial electrical resistance comprised between 1 and 1000 MΩ/□ according to standard ASTMD 257-97, -98, -99 or ASTMD257-07, as measured at atmospheric pressure or under primary vacuum conditions (10⁻³ Torr);
- class 0 or 1 out of 5 adherence according to standard NFEN ISO2409 (classification 30-038).

14. A substrate coated with a coating according to claim 12 or 13.

15. The substrate according to claim 14 selected from satellites, launchers or any element of such satellites or launchers.
